# EUROPEAN PATENT SPECIFICATION

(11) **EP 2 514 950 B1**
(45) Date of publication and mention of the grant of the patent: **18.02.2015**
(21) Application number: 12165068.3
(22) Date of filing: 20.04.2012
(51) Int. Cl.: F02D 11/10, F02D 41/06

(54) **Method for controlling the number of rotations per minute of an internal combustion engine during a takeoff phase of a vehicle provided with a manual transmission**
Verfahren zur Motordrehzahlsteuerung eines Verbrennungsmotors whärend der Anfahrphase eines Kraftfahrzeuges
Procédé de contrôle du régime d'un moteur à combustion interne pendant une phase de démarrage d'un véhicule automobile

(30) Priority: 20.04.2011 IT BO20110214
(43) Date of publication of application: 24.10.2012
(73) Proprietor: Magneti Marelli S.p.A., Corbetta (MI) (IT)
(72) Inventor: Zanotti, Massimo, 40040 VADO (IT); Leoni, Andrea, 06126 PERUGIA (IT); Monacelli, Francesco, 06023 GUALDO TADINO (IT)
(74) Representative: Bergadano, Mirko

(56) References cited:
- EP-A1- 1 455 073
- EP-A2- 0 930 424
- DE-A- 4 140 328
- DE-A1-102007 001 838

## Description

### TECHNICAL FIELD

The present invention relates to a method for controlling the number of rotations per minute of an internal combustion engine during a takeoff phase of a vehicle provided with a manual transmission.

### PRIOR ART

The takeoff phase of a vehicle (also commonly referred to as the driveoff phase), i.e. the phase in which the previously stationary vehicle starts moving by creating a mechanical connection between the driving shaft of the engine and the drive wheels, is deemed particularly important by all motor vehicle manufacturers because it has a direct impact on the driver's impressions of comfort and performance with regards to the vehicle brand and model.

The takeoff phase is particularly critical because it occurs at a rather low number of rotations per minute (i.e. at idle number of rotations per minute), and thus with a low available torque (the engine torque greatly depends on the number of rotations per minute of the engine); furthermore, the takeoff phase is particularly critical because it implies a phase of high discontinuity for the engine in terms of torque and mechanical inertia, because at the beginning of the takeoff phase the engine must deliver a small (virtually constant) torque to sustain the rotation of the engine only at the idle number of rotations per minute, and at the end of takeoff phase, the engine must deliver a much higher torque to move and accelerate the whole mass of the vehicle.

In vehicles provided with a servo-assisted transmission or with an automatic transmission, the takeoff phase is entirely managed by the electronic control units of the engine and of the transmission, and therefore an either optimal or nearly optimal progression of the takeoff phase can be obtained under all conditions. In vehicles provided with manual transmission, instead, the takeoff phase is greatly determined by the driver who, on one hand, operates the accelerator to control the generation of torque, and on the other hand operates the clutch to control the connection of the engine to the drive wheels. Therefore, during the takeoff phase, the electronic control unit of the engine must attempt to go along with the driver's maneuvers, trying to compensate as much as possible for the driver's "mistakes". However, when the driver's maneuvers are completely "wrong" (e.g. when the driver releases the clutch very quickly without pressing the accelerator at the same time), the electronic control unit of the engine is in trouble because it does not have any means to compensate for the driver's "mistakes", and therefore the takeoff phase is problematic (i.e. the vehicle jerks or the engine may even stall).

Patent application EP0930424A2 describes a method for controlling the number of rotations per minute of an internal combustion engine during a takeoff phase of a vehicle provided with a manual transmission; the control method includes the steps of: determining an idle number of rotations per minute; controlling the internal combustion engine, so that the actual number of rotations per minute is not lower than the idle number of rotations per minute; recognizing the beginning of a takeoff phase of the vehicle; establishing a takeoff increase of the number of rotations per minute; and controlling, when the beginning of the takeoff phase of the vehicle is recognized, the internal combustion engine so that the actual number of rotations per minute is not lower than the idle number of rotations per minute increased by the takeoff increase.

However, even when the method for controlling the number of rotations per minute described in patent application EP0930424A2 is followed, the takeoff phase may be problematic under some conditions (i.e. the vehicle jerks or the engine may even stall).

### DESCRIPTION OF THE INVENTION

It is the object of the present invention to provide a method for controlling the number of rotations per minute of an internal combustion engine during a takeoff phase of a vehicle provided with a manual transmission, which control method is free from the above-described drawbacks, and in particular is easy and cost-effective to be implemented.

According to the present invention, a method for controlling the number of rotations per minute of an internal combustion engine during a takeoff phase of a vehicle provided with a manual transmission is provided as claimed in the appended claims.

### BRIEF DESCRIPTION OF THE DRAWINGS

The present invention will now be described with reference to the accompanying drawings, which illustrate a non-limitative embodiment thereof, in which:
- figure 1 is a diagrammatic view of a vehicle provided with an electronic control unit which implements the method for controlling the number of rotations per minute during the takeoff phase object of the present invention;
- figures 2-4 are three block charts which show respective control logics implemented in the electronic control unit in figure 1; and
- figure 5 is a chart which shows an experimental control map stored in a memory of the electronic control unit in figure 1.

### PREFERRED EMBODIMENTS OF THE INVENTION

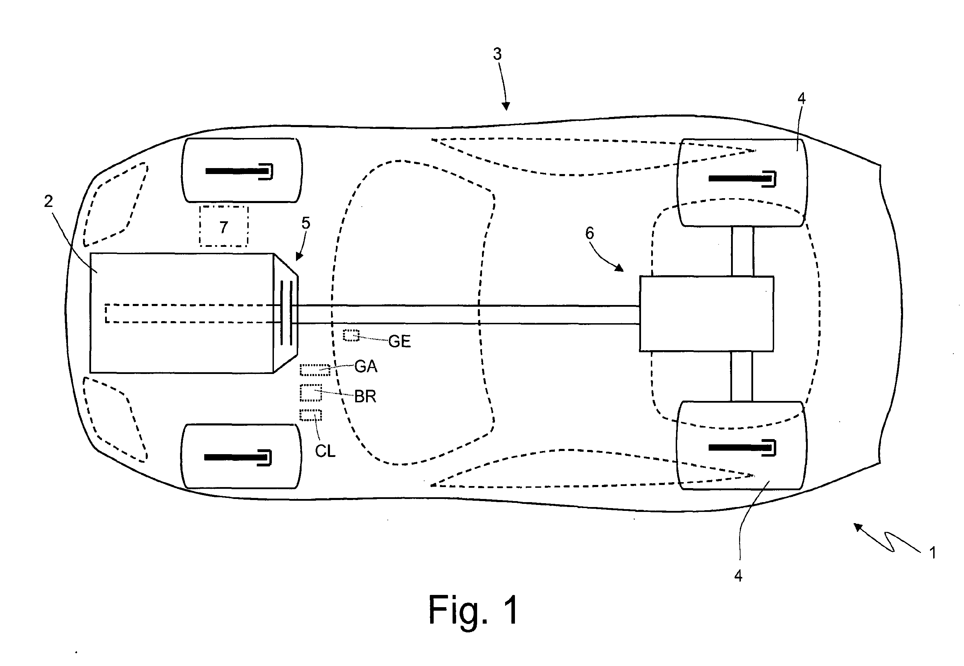

In figure 1, reference numeral 1 indicates as a whole a road vehicle provided with a thermal internal combustion engine 2 arranged in front position and a manual transmission 3 which transmits the torque generated by the thermal engine 2 to the rear drive wheels 4. Transmission 3 comprises a clutch 5 arranged in front position in a bell integral with the engine crankcase and a gearbox 6 arranged in rear position at the rear drive wheels 4.

The internal combustion engine 2 is controlled by an electronic control unit 7, which *inter alia* governs the number of rotations per minute of the internal combustion engine 1. The electronic control unit 7 detects the position of the accelerator pedal GA, the position of the brake pedal BR, the position of a clutch pedal CL, and the position of a gear control GE (as the transmission 3 is manual, clutch 5 is directly controlled by the driver by means of the clutch pedal CL and gearbox 6 is directly controlled by the driver by means of the gear control GE).

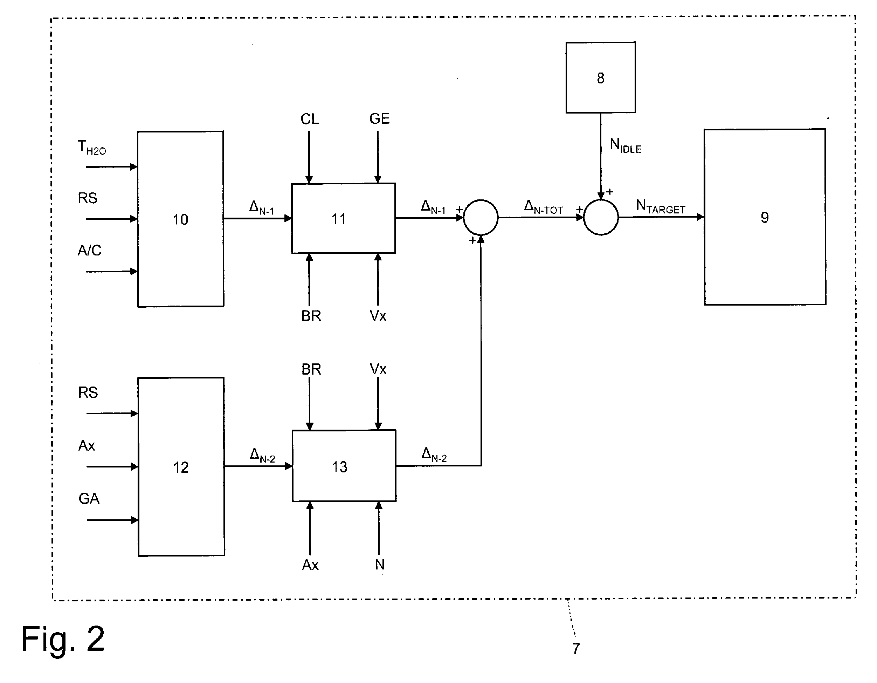

As shown in figure 2, the calculation block 8 of the electronic control unit 7 determines an idle number of rotations per minute N_{IDLE} (i.e. the rotation speed that the internal combustion engine 2 should maintain when it is under idling conditions) in a known manner (e.g. by reading the value in a memory cell). When the internal combustion engine 2 is under idling conditions, the idle number of rotations per minute N_{IDLE} becomes the target number of rotations per minute N_{TARGET} which is supplied to a regulator 9 which controls the internal combustion engine 2 in a known manner to follow the target number of rotations per minute N_{TARGET} (and thus to ensure that the actual number of rotations per minute N is not lower than the idle number of rotations per minute N_{IDLE}, and in particular that the actual number of rotations per minute N is in the surround of the idle number of rotations per minute N_{IDLE}) .

Furthermore, a calculation block 10 of the electronic control unit 7 determines a takeoff increase Δ_{N-1} of the number of rotations per minute, while a calculation block 11 recognizes the beginning of a takeoff phase of vehicle 1; when the beginning of the takeoff phase of vehicle 1 is recognized, the calculation block 11 authorizes adding the takeoff increase Δ_{N-1} to the idle number of rotations per minute N_{IDLE}, so that the target number of rotations per minute N_{TARGET} which is followed by the regulator 9 is equal to the sum of the idle number of rotations per minute N_{IDLE} and the takeoff increase Δ_{N-1}. In other words, the electronic control unit 7 controls the internal combustion engine 2, when the beginning of the takeoff phase of vehicle 1 is recognized, so that the actual number of rotations per minute N is in the surround of the idle number of rotations per minute N_{IDLE} increased by the takeoff increase Δ_{N-1}.

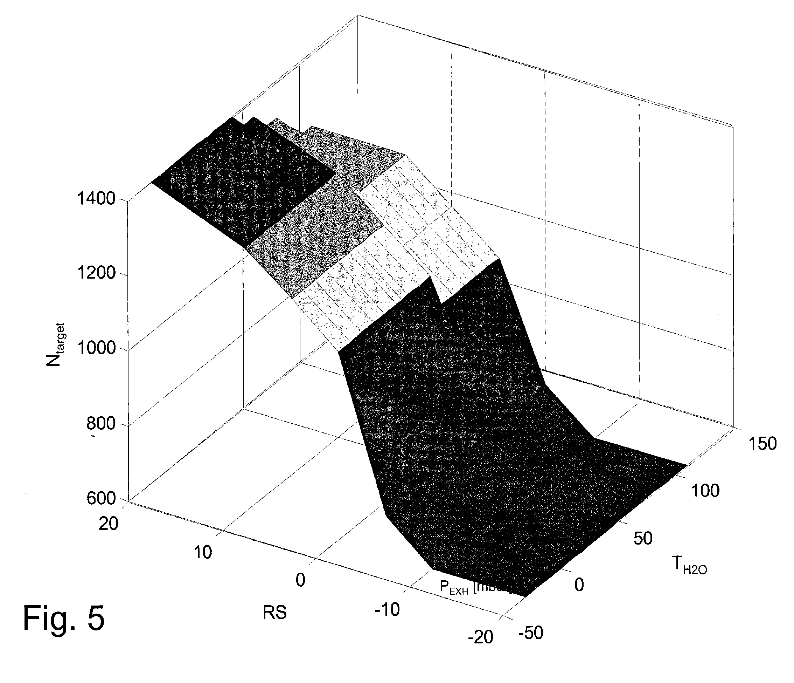

The calculation block 10 determines the extent of the takeoff increase Δ_{N-1} as a function of the temperature T_{H2O} of a cooling liquid of the internal combustion engine 2, as a function of a gradient RS of the stretch of road on which vehicle 1 runs, and as a function of an A/D use of a compressor of an air-conditioning system. According to a preferred embodiment, the calculation block 10 uses an experimental (i.e. determined experimentally) control map to determine the takeoff increase Δ_{N-1} as a function of the temperature T_{H2O} of the cooling liquid and as a function of the gradient RS of the stretch of road on which vehicle 1 runs; an example of such an experimental control map is shown in figure 5. Instead, the fact that the compressor of the air-conditioning system is used or not normally determines a fixed increase which is added to the increase determined by the experimental control map, if needed. The extent of the first takeoff increase Δ_{N-1} increases as the temperature T_{H2O} of the cooling liquid decreases, increases as the gradient RS of the stretch of road on which vehicle 1 runs increases, and increases when the compressor of the air-conditioning system is used.

It is worth noting that the gradient RS of the stretch of road on which vehicle 1 runs may be zero (flat road), positive (uphill road), or negative (downhill road); when the gradient RS is positive (uphill road), the takeoff increase Δ_{N-1} rises because a component of the gravity force must also be overcome in order to move the vehicle 1, while when the gradient RS is negative (downhill road), the takeoff increase Δ_{N-1} decreases and may be even cancelled out because a component of the force of gravity pushes to move the vehicle 1. The dependence on the gradient RS of the stretch of road on which vehicle 1 runs is very important because it allows to increase the number of rotations per minute proportionally to how steep the gradient is, while allowing not to increase the number of rotations per minute in downhill circumstances when not required, or it could even be dangerous because vehicle 1 could unexpectedly accelerate. The gradient RS of the stretch of road on which vehicle 1 runs is determined in a known manner either by means of a specific sensor or by means of an estimation algorithm based on information supplied by the accelerometers normally present in modern vehicles (e.g. the accelerometers used in "ESP" stability control system).

By way of example, the takeoff increase Δ_{N-1} has an order of magnitude of 200-400 rpm when the gradient RS of the stretch of road on which vehicle 1 runs is zero, may be zero when the gradient RS of the strength of road on which vehicle 1 runs is negative (downhill road), and may reach even 600-800 rpm when the gradient RS of the stretch of road on which vehicle 1 runs is positive (uphill road).

The calculation block 11 recognizes the beginning of the takeoff phase when the driver of vehicle 1 manifests the will to take off, i.e. when the clutch 5 is open (that is when the clutch pedal CL is pressed) and a gear is engaged in a gearbox 6 (that is when the gear control GE determines the engagement of a gear in the gearbox 6). According to an alternative embodiment, the calculation block 11 recognizes the beginning of the takeoff phase of vehicle 1 only when the clutch pedal CL starts being released in the absence of torque transmission through the clutch 5 and a gear is engaged in gearbox 6; in other words, the beginning of the takeoff phase is recognized when the driver starts releasing the clutch pedal CL and a gear is engaged in gearbox 6. The increase of number of rotations per minute irrespective of the pressing of the accelerator pedal GA may have a strong impact on the driver (who could observe the increase of number of rotations per minute on the dashboard and/or could hear the internal combustion engine 1 accelerate), and therefore attempting to increase the number of rotations per minute without the driver clearly perceiving the increase is absolutely needed. By increasing the number of rotations per minute when the driver manifests the will to take off (i.e. presses the clutch pedal CL while engaging a gear in gearbox 6 or starts releasing the clutch CL when a gear is engaged in gearbox 6), the increase of number of rotations per minute determined by the takeoff increase Δ_{N-1} is deemed "coherent" (i.e. not anomalous) by the driver, as it is consistent with the maneuvers which are being carried out.

As shown in figure 2, a calculation block 12 of the electronic control unit 7 determines a takeoff increase Δ_{N-2} of the number of rotations per minute, while a calculation block 13 recognizes the starting instant of a coupling of the clutch discs of clutch 5 (i.e. the beginning of the torque transmission through clutch 5); when the starting instant of the coupling of the clutch discs is recognized, the calculation block 13 authorizes adding the takeoff increase Δ_{N-2} to the takeoff increase Δ_{N-1} and to the idle number of rotations per minute N_{IDLE} so that the target number of rotations per minute N_{TARGET} which is followed by regulator 9 is equal to sum of the idle number of rotations per minute N_{IDLE}, the takeoff increase Δ_{N-1} and the takeoff increase Δ_{N-2}. In other words, the electronic control unit 7 controls the internal combustion engine 2, when the starting instant of the coupling of the clutch discs is recognized, so that the actual number of rotations per minute N is in the surround of the idle number of rotations per minute N_{IDLE} increased by the takeoff increase Δ_{N-1} and by the takeoff increase Δ_{N-2}.

The calculation block 12 determines the extent of the takeoff increase Δ_{N-2} as a function of the gradient RS of the stretch of road on which vehicle 1 runs, as a function of a longitudinal acceleration Ax of vehicle 1, and as a function of a position of the accelerator pedal GA. In particular, the extent of the takeoff increase Δ_{N-2} increases as the gradient RS of the stretch of road on which vehicle 1 runs increases, increases as the longitudinal acceleration Ax of vehicle 1 increases (the greater the longitudinal acceleration Ax of vehicle 1, the faster the clutch closing maneuver), and increases as the position of the accelerator pedal GA increases (i.e. it is greater the more the accelerator pedal GA is pressed to go along with a request for greater torque by the driver). According to a preferred embodiment, the calculation block 12 uses an experimental (i.e. determined experimentally) control map to determine the takeoff increase Δ_{N-2}.

By way of example, the takeoff increase Δ_{N-2} has an order of magnitude of 100-300 rpm when the gradient RS of the stretch of road on which vehicle 1 runs is zero; increasing the number of rotations per minute during the step of coupling the clutch discs allows to compensate for the drop in number of rotations per minute which is typical of this phase. In other words, by virtue of the takeoff increase Δ_{N-2}, the typical drop in number of rotations per minute of the step of coupling the clutch discs is compensated, and therefore the driver does not perceive at all the application of the takeoff increase Δ_{N-2}, because the actual number of rotations per minute remains totally constant.

The calculation block 13 recognizes the starting instant of the coupling of the clutch discs when the longitudinal acceleration Ax of vehicle 1 increases, i.e. when the longitudinal acceleration Ax of vehicle 1 which was previously zero (vehicle 1 stationary) exceeds a threshold value. According to an alternative embodiment, the calculation block 13 recognizes the starting instant of the coupling of the clutch discs when a decrease in the actual number of rotations per minute N and an increase in the longitudinal acceleration Ax of vehicle 1 occur simultaneously.

The determined increase of the number of rotations per minute of both the takeoff increase Δ_{N-1} and the takeoff increase Δ_{N-2} allows to increase the torque generated by the internal combustion engine 1 and thus allows a torque adapted to move the vehicle 1, even in the absence of a correct pressing of the accelerator pedal GA by the driver, to be available.

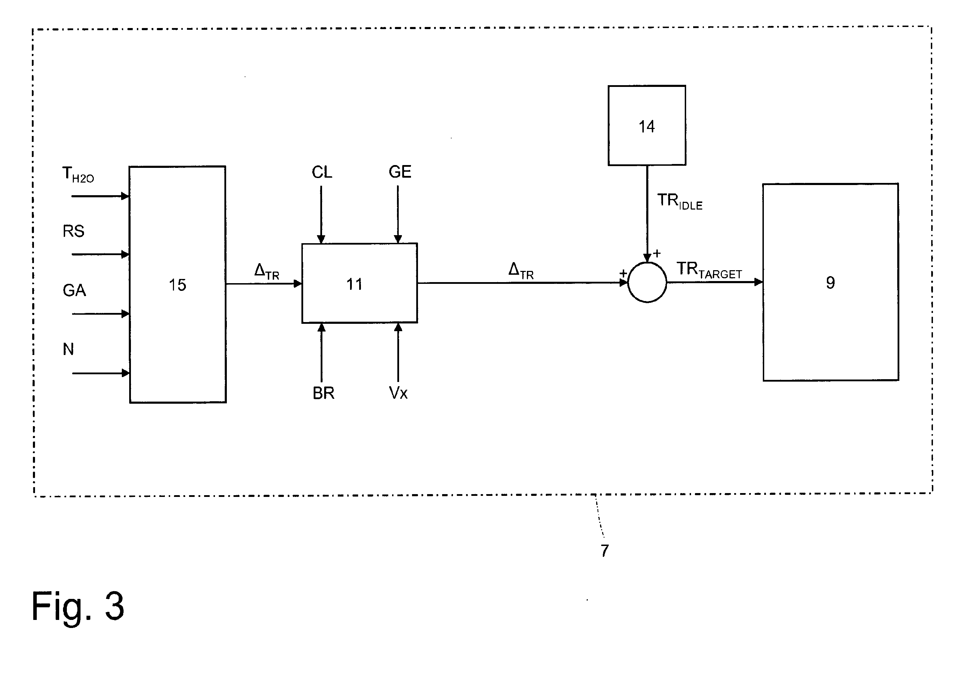

As shown in figure 3, the calculation block 14 of the electronic control unit 7 determines an idle torque reserve TR_{IDLE} (i.e. the torque reserve that the internal combustion engine 2 should maintain when it is under idling conditions) in a known manner (e.g. by reading the value in a memory cell). When the internal combustion engine 2 is under idling conditions, the idle torque reserve TR_{IDLE} becomes the target torque reserve TR_{TARGET} which is supplied to the regulator 9 which controls the internal combustion engine 2 in a known manner in order to follow the target torque reserve TR_{TARGET} (so that the actual torque reserve TR is not lower than the idle torque reserve TR_{IDLE}, and in particular the actual torque reserve TR is in the surround of an idle torque reserve TR_{IDLE}).

Furthermore, a calculation block 15 of the electronic control unit 7 determines a takeoff torque reserve increase Δ_{TR}, while the calculation block 11 recognizes the beginning of the takeoff phase of vehicle 1 (as described above); when the beginning of the takeoff phase of vehicle 1 is recognized, the calculation block 11 authorizes adding the takeoff increase Δ_{TR} to the idle torque reserve TR_{IDLE}, so that the target torque reserve TR_{TARGET} which is followed by the regulator 9 is equal to the sum of the idle torque reserve TR_{IDLE} and the takeoff increase Δ_{TR}. In other words, when the beginning of the takeoff phase of vehicle 1 is recognized, the electronic control unit 7 controls the internal combustion engine 2 so that the actual torque reserve is not lower than the idle torque reserve TR_{IDLE} increased by the takeoff increase Δ_{N-1}.

The calculation block 15 determines the extent of the takeoff increase Δ_{TR} as a function of the temperature T_{H2O} of the cooling liquid of the internal combustion engine 2, as a function of the gradient RS of the stretch of road on which vehicle 1 runs, as a function of the position of the accelerator pedal GA, and as a function of the actual number of rotations per minute N. According to a preferred embodiment, the calculation block 15 uses an experimental (i.e. determined experimentally) control map to determine the takeoff increase Δ_{TR}. The extent of the takeoff increase Δ_{TR} increases as the temperature T_{H2O} of the cooling liquid decreases, increases as the gradient RS of the stretch of road on which vehicle 1 runs increases, decreases (until it is cancelled out) as the position of the accelerator pedal GA increases (in particular, the extent of the takeoff increase Δ_{TR} normally has a "humpback" shape, and is normally reduced to zero as the position of the accelerator pedal GA increases), and increases as the actual number of rotations per minute N decreases.

The increase of the torque reserve TR allows the electronic control unit 7 to very rapidly increase (i.e. by operating on the spark advance that is already effective at the next combustion) the torque generated by the internal combustion engine 1 in case of need (i.e. in the absence of a correct pressing of the accelerator pedal GA by the driver). In other words, the increase of torque reserve TR allows the regulator 9 which controls the number of rotations per minute to have a greater authority and to operate more rapidly in case of need (i.e. in the absence of a correct pressing of the accelerator pedal GA by the driver).

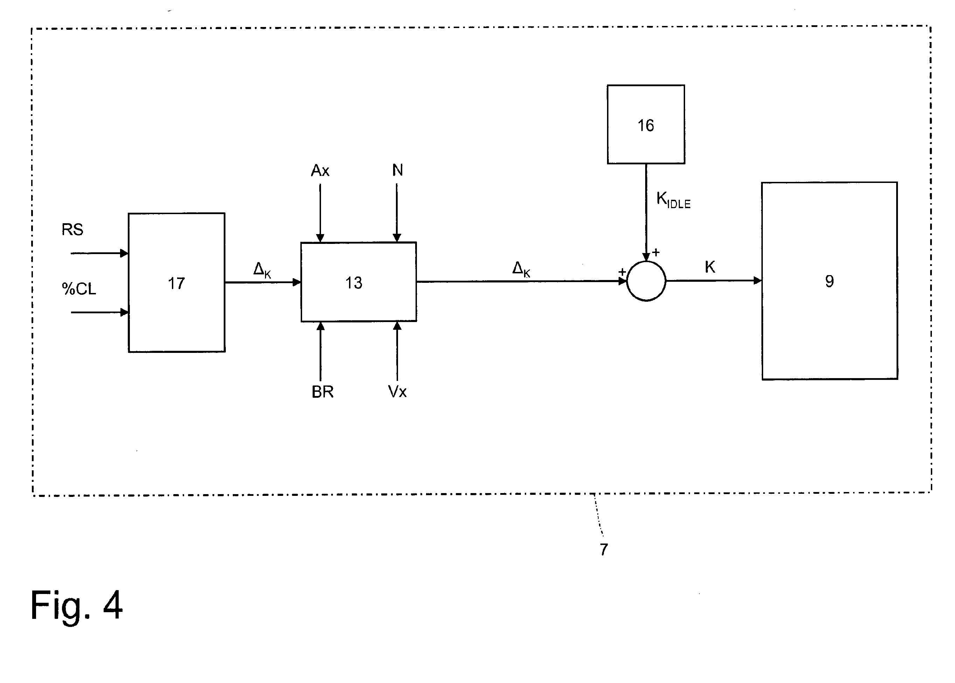

As shown in figure 4, a calculation block 16 of the electronic control unit 7 determines idle coefficients K_{IDLE} of the regulator 9 in a known manner (e.g. by reading the value of the memory cell), which regulator controls the number of rotations per minute (e.g. the proportional, derivative and integrative coefficients, if the regulator 9 uses a PID logic); when the internal combustion engine 2 is under idling conditions, the idle coefficients K_{IDLE} become the K coefficients used by regulator 9. Furthermore, the calculation block 17 of the electronic control unit 7 determines a takeoff variation Δ_{K} of the coefficients; when the starting instant of the coupling of the clutch discs is recognized, the calculation block 13 authorizes varying (i.e. algebraically adding by taking the sign into account) the idle coefficients K_{IDLE} of regulator 9 by applying the takeoff variation Δ_{K}. In other words, when the starting instant of the coupling of the clutch discs is recognized, the electronic control unit 7 varies the coefficients K_{IDLE} of the regulator 9 which controls the number of rotations per minute by applying the takeoff variation Δ_{K}.

The calculation block 17 determines the extent of the takeoff variation Δ_{K} of the coefficients as a function of the gradient RS of the stretch of road on which vehicle 1 runs, and as a function of a coupling degree %CL of the clutch discs of clutch 5. The coupling degree %CL of the clutch discs is provided, for example, by a ratio of the rotation speed of an output shaft of clutch 5 to the rotation speed of an input shaft of clutch 5. The takeoff variation Δ_{K} determines an increase of the response rapidity of the control carried out by the regulator 9, i.e. makes the control carried out by the regulator 9 "faster". The control response rapidity determined by the takeoff variation Δ_{K} is increased proportionally to the increase of the gradient RS of the stretch of road on which vehicle 1 runs, and proportionally to the decrease of the degree of coupling %CL of the clutch discs. According to a preferred embodiment, the calculation block 17 uses an experimental (i.e. determined experimentally) control map to determine the takeoff variation Δ_{K}.

The variation of the idle coefficients K_{IDLE} of regulator 9 allows the electronic control unit 7 to react faster in case of a drop of the number of rotations per minute after the coupling of the clutch discs, which drop is determined by the absence of a correct pressing of the accelerator pedal GA by the driver, for example.

According to a preferred embodiment shown in the accompanying drawings, the calculation blocks 11 and 13 of the electronic control unit 7 recognize the pressing of the brake pedal BR and either reduce or cancel out takeoff increases and variations Δ_{N-1}, Δ_{N-2}, Δ_{TR}, Δ_{K} when the pressing of the brake pedal BR is recognized. In other words, the pressing of the brake pedal BR clearly indicates the driver's will not to start the vehicle 1 (i.e. not to carry out the takeoff phase), and thus when the driver presses the brake pedal BR, then all the contrivances to improve the takeoff phase (takeoff increases and variations Δ_{N-1}, Δ_{N-2}, Δ_{TR}. Δ_{K}) are first reduced and then cancelled out.

According to a preferred embodiment, the calculation blocks 11 and 13 of the electronic control unit 7 recognize the end of the takeoff phase of vehicle 1 and therefore gradually cancel out the takeoff increases and variations Δ_{N-1}, Δ_{N-2}, Δ_{TR}, Δ_{K} at the end of the takeoff phase. The calculation blocks 11 and 13 of the electronic control unit 7 preferably recognize the end of the takeoff phase of vehicle 1 when a longitudinal speed Vx of vehicle 1 exceeds a threshold value (generally equal to 5-10 km/h).

The above-described method for controlling the number of rotations per minute of an internal combustion engine 2 during a takeoff phase has many advantages.

Firstly, the above-described method for controlling the number of rotations per minute is simple and cost-effective to be implemented in an electronic control unit of a modern generation internal combustion engine, because it only uses measurements supplied by sensors which are always present in modern internal combustion engines (thus no hardware change is needed) and requires neither high calculation capacity nor high memory capacity.

Furthermore, the above-described method for controlling the number of rotations per minute ensures that the takeoff phase of vehicle 1 always occurs in an at least satisfactory manner, and in most cases in an optimal manner also when the driver carries out maneuvers incorrectly (e.g. when the clutch pedal C1 is released too quickly or when the accelerator pedal GA is not sufficiently pressed). In other words, the above-described method for controlling the number of rotations per minute implements a regulation of the number of rotations per minute which supports, and when required compensates for (also with torque corrections), the driver's maneuvers thus allowing to perform the takeoff phase in an at least satisfactory manner also when the driver carries out the maneuvers incorrectly.

Finally, the above-described method for controlling the number of rotations per minute increases, when needed, the number of rotations per minute in a substantially transparent manner for the driver, i.e. without the driver perceiving an "anomalous" increase of the number of rotations per minute (i.e. an increase of the number of rotations per minute not justified by the commands imparted by the driver).

## Claims

1. A method for controlling the number of revolutions per minute of an internal combustion engine (2) during a takeoff phase of a vehicle (1) provided with a manual transmission (3); the control method comprises the steps of:
determining an idle number of revolutions per minute (N_{IDLE}) ;
controlling the internal combustion engine (2), so that the actual number of rotations per minute (N) is not lower than the idle number of revolutions per minute (N_{IDLE}) ;
recognizing the beginning of a takeoff phase of the vehicle (1);
establishing a first takeoff increase (Δ_{N-1}) of the number of revolutions per minute; and
controlling, when the beginning of the takeoff phase of the vehicle (1) is recognized, the internal combustion engine (2), so that the actual number of rotations per minute (N) is not lower than the idle number of revolutions per minute (N_{IDLE}) increased by the first takeoff increase (Δ_{N-1});
the control method is **characterized in that** it comprises the further step of determining the extent of the first takeoff increase (Δ_{N-1}) as a function of the temperature (T_{H2O}) of a cooling liquid of the internal combustion engine (2), and/or as a function of a gradient (RS) of the stretch of road on which the vehicle runs (1), and/or as a function of a use of a compressor of an air-conditioning system.

2. A control method according to claim 1, wherein the extent of the first takeoff increase (Δ_{N-1}) increases when the temperature (T_{H2O}) of the cooling liquid decreases, increases when the gradient (RS) of the stretch of road on which the vehicle (1) runs increases, and increases when the compressor of the air-conditioning system is used.

3. A control method according to claim 1 or 2, wherein the beginning of the takeoff phase is recognized when the driver of the vehicle (1) manifests the will to take off.

4. A control method according to claim 3, wherein the beginning of the takeoff phase is recognized when a clutch (5) of the transmission (3) is open and a gear is engaged in a gearbox (6) of the transmission (3).

5. A control method according to claim 3, wherein the beginning of the takeoff phase of the vehicle (1) is recognized when a clutch pedal (CL) starts being released in absence of a torque transmission through a clutch (5) of the transmission (3) and a gear is engaged in a gearbox (6) of the transmission (3).

6. A control method according to any of the claims from 1 to 5 and comprising the further steps of:
recognizing the starting instant of a coupling of the clutch discs of a clutch (5) of the transmission (3);
establishing a second takeoff increase (Δ_{N-2}) of the number of revolutions per minute;
controlling, when the starting instant of the coupling of the clutch discs is recognized, the internal combustion engine (2), so that the actual number of rotations per minute (N) is not lower than the idle number of revolutions per minute (N_{IDLE}) increased by the first takeoff increase (Δ_{N-1}) and by the second takeoff increase (Δ_{N-2}).

7. A control method according to claim 6, wherein the starting instant of the coupling of the clutch discs is recognized when an increase in the longitudinal acceleration (Ax) of the vehicle (1) takes place.

8. A control method according to claim 6, wherein the starting instant of the coupling of the clutch discs is recognized when a decrease in the actual number of rotations per minute (N) and an increase in the longitudinal acceleration (Ax) of the vehicle (1) simultaneously take place.

9. A control method according to claim 6, 7 or 8, wherein the extent of the second takeoff increase (Δ_{N-2}) is determined as a function of a gradient (RS) of the stretch of road on which the vehicle runs (1), and/or as a function of a longitudinal acceleration (Ax) of the vehicle (1), and/or as a function of a position of the accelerator pedal (GA).

10. A control method according to claim 9, wherein the extent of the second takeoff increase (Δ_{N-2}) increases when the gradient (RS) of the stretch of road on which the vehicle (1) runs increases, increases when the longitudinal acceleration (Ax) of the vehicle (1) increases, and increases when the position of the accelerator pedal (GA) increases.

11. A control method according to any of the claims from 1 to 10 and comprising the further steps of:
determining an idle torque reserve (TR_{IDLE});
establishing a third takeoff increase (Δ_{TR}) of the number of revolutions per minute;
controlling, when the beginning of the takeoff phase of the vehicle (1) is recognized, the internal combustion engine (2), so that the actual torque reserve is not lower than the idle torque reserve (TR_{IDLE}) increased by the third takeoff increase (Δ_{TR}).

12. A control method according to claim 11, wherein the extent of the third takeoff increase (Δ_{TR}) is determined as a function of the temperature (T_{H2O}) of a cooling liquid of the internal combustion engine (2), and/or as a function of a gradient (RS) of the stretch of road on which the vehicle (1) runs, and/or as a function of a position of the accelerator pedal (GA), and/or as a function of the actual number of rotations per minute (N).

13. A control method according to claim 12, wherein the extent of the third takeoff increase (Δ_{TR}) increases when the temperature (T_{H2O}) of the cooling liquid decreases, increases when the gradient (RS) of the stretch of road on which the vehicle (1) runs increases, decreases when the position of the accelerator pedal (GA) increases, and increases when the actual number of rotations per minute (N) decreases.

14. A control method according to any of the claims from 1 to 13 and comprising the further steps of:
determining coefficients (K_{IDLE}) of at least one regulator (9), which controls the number of revolutions per minute;
recognizing the starting instant of a coupling of the clutch discs of a clutch (5) of the transmission (3);
establishing a takeoff variation (Δ_{K}) of the coefficients; and
varying, when the starting instant of the coupling of the clutch discs is recognized, the coefficients (K_{IDLE}) of the regulator (9) controlling the number of revolutions per minute by applying the takeoff variation (Δ_{K}).

15. A control method according to claim 14, wherein the extent of the takeoff variation (Δ_{K}) of the coefficients is determined as a function of a gradient (RS) of the stretch of road on which the vehicle (1) runs, and/or as a function of a coupling degree (%CL) of the clutch discs.

16. A control method according to claim 15, wherein the coupling degree (%CL) of the clutch discs is provided by a ratio between the rotation speed of an output shaft of the clutch (5) and the rotation speed of an input shaft of the clutch (5).

## Patentansprüche

1. Verfahren zum Steuern der Drehzahl eines
Verbrennungsmotors (2) während einer Anfahrphase eines mit einem Handschaltgetriebe (3) ausgestatteten Fahrzeugs (1); das Steuerungsverfahren beinhaltet folgende Schritte:
Bestimmen einer Leerlaufdrehzahl (N_{IDLE});
Steuern des Verbrennungsmotors (2) in der Weise, dass die Ist-Drehzahl (N) nicht niedriger als die Leerlaufdrehzahl (N_{IDLE}) ist;
Erkennen des Beginns einer Anfahrphase des Fahrzeugs (1);
Feststellen einer ersten Anfahrerhöhung (Δ_{N-1}) der Drehzahl; und
wenn der Beginn der Anfahrphase des Fahrzeugs (1) erkannt wird, Steuern des Verbrennungsmotors (2) in der Weise, dass die Ist-Drehzahl (N) nicht niedriger als die um die erste Anfahrerhöhung (Δ_{N-1}) erhöhte Leerlaufdrehzahl (N_{IDLE}) ist;
das Steuerungsverfahren ist **dadurch gekennzeichnet, dass** es den weiteren Schritt des Bestimmens des Maßes der ersten Anfahrerhöhung (Δ_{N-1}) in Abhängigkeit von der Temperatur (T_{H2O}) einer Kühlflüssigkeit des Verbrennungsmotors (2) und/oder in Abhängigkeit von einer Steigung (RS) der Straßenstrecke, auf der das Fahrzeug fährt (1), und/oder in Abhängigkeit von einer Verwendung eines Kompressors einer Klimaanlage beinhaltet.

2. Steuerungsverfahren nach Anspruch 1, wobei das Maß der ersten Anfahrerhöhung (Δ_{N-1}) wächst, wenn die Temperatur (T_{H2O}) der Kühlflüssigkeit sinkt, wächst, wenn die Steigung (RS) der Straßenstrecke, auf der das Fahrzeug (1) fährt, zunimmt, und wächst, wenn der Kompressor der Klimaanlage verwendet wird.

3. Steuerungsverfahren nach Anspruch 1 oder 2, wobei der Beginn der Anfahrphase erkannt wird, wenn der Fahrer des Fahrzeugs (1) seinen Willen bekundet, anzufahren.

4. Steuerungsverfahren nach Anspruch 3, wobei der Beginn der Anfahrphase erkannt wird, wenn eine Kupplung (5) des Getriebes (3) offen ist und in einem Schaltgetriebe (6) des Getriebes (3) ein Gang eingelegt ist.

5. Steuerungsverfahren nach Anspruch 3, wobei der Beginn der Anfahrphase des Fahrzeugs (1) erkannt wird, wenn begonnen wird, ein Kupplungspedal (CL) bei Fehlen einer Drehmomentübertragung durch eine Kupplung (5) des Getriebes (3) freizugeben, und in einem Schaltgetriebe (6) des Getriebes (3) ein Gang eingelegt ist.

6. Steuerungsverfahren nach einem der Ansprüche 1 bis 5, und mit folgenden weiteren Schritten:
Erkennen des Augenblicks des Beginns einer Verbindung der Kupplungsscheiben einer Kupplung (5) des Getriebes (3);
Feststellen einer zweiten Anfahrerhöhung (Δ_{N-2}) der Drehzahl;
wenn der Augenblick des Beginns der Verbindung der Kupplungsscheiben erkannt wird, Steuern des Verbrennungsmotors (2) in der Weise, dass die Ist-Drehzahl (N) nicht niedriger als die um die erste Anfahrerhöhung (Δ_{N-1}) und um die zweite Anfahrerhöhung (Δ_{N-2}) erhöhte Leerlaufdrehzahl (N_{IDLE}) ist;

7. Steuerungsverfahren nach Anspruch 6, wobei der Augenblick des Beginns der Verbindung der Kupplungsscheiben erkannt wird, wenn eine Zunahme der Längsbeschleunigung (Ax) des Fahrzeugs (1) stattfindet.

8. Steuerungsverfahren nach Anspruch 6, wobei der Augenblick des Beginns der Verbindung der Kupplungsscheiben erkannt wird, wenn eine Senkung der Ist-Drehzahl (N) und eine Zunahme der Längsbeschleunigung (Ax) des Fahrzeugs (1) gleichzeitig stattfinden.

9. Steuerungsverfahren nach Anspruch 6, 7 oder 8, wobei das Maß der zweiten Anfahrerhöhung (Δ_{N-2}) in Abhängigkeit von einer Steigung (RS) der Straßenstrecke, auf der das Fahrzeug (1) fährt, und/oder in Abhängigkeit von einer Längsbeschleunigung (Ax) des Fahrzeugs (1) und/oder in Abhängigkeit von einer Stellung des Fahrpedals (GA) bestimmt wird.

10. Steuerungsverfahren nach Anspruch 9, wobei das Maß der zweiten Anfahrerhöhung (Δ_{N-2}) wächst, wenn die Steigung (RS) der Straßenstrecke, auf der das Fahrzeug (1) fährt, zunimmt, wächst, wenn die Längsbeschleunigung (Ax) des Fahrzeugs (1) zunimmt, und wächst, wenn das Fahrpedal (GA) in eine tiefere Stellung getreten wird.

11. Steuerungsverfahren nach einem der Ansprüche 1 bis 10, und mit folgenden weiteren Schritten:
Bestimmen einer Leerlaufdrehmomentreserve (TR_{IDLE});
Feststellen einer dritten Anfahrerhöhung (Δ_{TR}) der Drehzahl;
wenn der Beginn der Anfahrphase des Fahrzeugs (1) erkannt wird, Steuern des Verbrennungsmotors (2) in der Weise, dass die Ist-Drehmomentreserve nicht niedriger als die um die dritte Anfahrerhöhung (Δ_{TR}) erhöhte Leerlaufdrehmomentreserve (TR_{IDLE}) ist.

12. Steuerungsverfahren nach Anspruch 11, wobei das Maß der dritten Anfahrerhöhung (Δ_{TR}) in Abhängigkeit von der Temperatur (T_{H2O}) einer Kühlflüssigkeit des Verbrennungsmotors (2) und/oder in Abhängigkeit von einer Steigung (RS) der Straßenstrecke, auf der das Fahrzeug (1) fährt, und/oder in Abhängigkeit von einer Stellung des Fahrpedals (GA) und/oder in Abhängigkeit von der Ist-Drehzahl (N) bestimmt wird.

13. Steuerungsverfahren nach Anspruch 12, wobei das Maß der dritten Anfahrerhöhung (Δ_{TR}) wächst, wenn die Temperatur (T_{H2O}) der Kühlflüssigkeit sinkt, wächst, wenn die Steigung (RS) der Straßenstrecke, auf der das Fahrzeug (1) fährt, zunimmt, schrumpft, wenn das Fahrpedal (GA) in eine tiefere Stellung getreten wird, und wächst, wenn die Ist-Drehzahl (N) sinkt.

14. Steuerungsverfahren nach einem der Ansprüche 1 bis 13, und mit folgenden weiteren Schritten:
Bestimmen von Koeffizienten (K_{IDLE}) mindestens eines Reglers (9), der die Drehzahl regelt;
Erkennen des Augenblicks des Beginns einer Verbindung der Kupplungsscheiben einer Kupplung (5) des Getriebes (3);
Feststellen einer Anfahränderung (Δ_{K}) der Koeffizienten; und
wenn der Augenblick des Beginns der Verbindung der Kupplungsscheiben erkannt wird, Ändern der Koeffizienten (K_{IDLE}) des die Drehzahl regelnden Reglers (9) durch Anwenden der Anfahränderung (Δ_{K}).

15. Steuerungsverfahren nach Anspruch 14, wobei das Maß der Anfahränderung (Δ_{K}) der Koeffizienten in Abhängigkeit von einer Steigung (RS) der Straßenstrecke, auf der das Fahrzeug (1) fährt, und/oder in Abhängigkeit von einem Verbindungsgrad (%CL) der Kupplungsscheiben bestimmt wird.

16. Steuerungsverfahren nach Anspruch 15, wobei der Verbindungsgrad (%CL) der Kupplungsscheiben durch ein Verhältnis zwischen der Drehzahl einer Ausgangswelle der Kupplung (5) und der Drehzahl einer Eingangswelle der Kupplung (5) dargestellt wird.

## Revendications

1. Procédé pour commander le nombre de rotations par minutes d'un moteur à combustion interne (2) durant une phase de démarrage d'un véhicule (1) muni d'une transmission manuelle (3) ; le procédé de commande comprenant les étapes consistant à :
déterminer un nombre de rotations par minute au ralenti (N_{IDLE}) ;
commander le moteur à combustion interne (2), de telle sorte que le nombre effectif de rotations par minute (N) ne soit pas inférieur au nombre de rotations par minute au ralenti (N_{IDLE}) ;
reconnaître le commencement d'une phase de démarrage du véhicule (1) ;
établir une première augmentation de démarrage (Δ_{N-1}) du nombre de rotations par minute ; et
commander, lorsque le commencement de la phase de démarrage du véhicule (1) est reconnu, le moteur à combustion interne (2), de telle sorte que le nombre effectif de rotations par minute (N) ne soit pas inférieur au nombre de rotations par minute au ralenti (N_{IDLE}) augmenté de la première augmentation de démarrage (Δ_{N-1}) ;
le procédé de commande étant **caractérisé en ce qu'**il comprend l'étape supplémentaire de détermination de l'ampleur de la première augmentation de démarrage (Δ_{N-1}) en fonction de la température (T_{H2O}) d'un liquide de refroidissement du moteur à combustion interne (2), et/ou en fonction d'une pente (RS) du tronçon de route sur lequel se déplace le véhicule (1), et/ou en fonction d'une utilisation d'un compresseur d'un système de climatisation.

2. Procédé de commande selon la revendication 1, dans lequel l'ampleur de la première augmentation de démarrage (Δ_{N-1}) augmente lorsque la température (T_{H2O}) du liquide de refroidissement diminue, elle augmente lorsque la pente (RS) du tronçon de route sur lequel se déplace le véhicule (1) augmente, et elle augmente lorsque le compresseur du système de climatisation est utilisé.

3. Procédé de commande selon la revendication 1 ou 2, dans lequel le commencement de la phase de démarrage est reconnu lorsque le conducteur du véhicule (1) manifeste la volonté de démarrer.

4. Procédé de commande selon la revendication 3, dans lequel le commencement de la phase de démarrage est reconnu lorsqu'un embrayage (5) de la transmission (3) est ouvert et qu'une vitesse est mise en prise dans une boîte de vitesses (6) de la transmission (3).

5. Procédé de commande selon la revendication 3, dans lequel le commencement de la phase de démarrage du véhicule (1) est reconnu lorsqu'une pédale d'embrayage (CL) commence à être relâchée en l'absence d'une transmission de couple à travers un embrayage (5) de la transmission (3) et qu'une vitesse est mise en prise dans une boîte de vitesses (6) de la transmission (3).

6. Procédé de commande selon l'une quelconque des revendications 1 à 5, et comprenant les étapes supplémentaires consistant à :
reconnaître l'instant de début d'un couplage des disques d'embrayage d'un embrayage (5) de la transmission (3) ;
établir une deuxième augmentation de démarrage (Δ_{N-2}) du nombre de rotations par minute ;
commander, lorsque l'instant de début du couplage des disques d'embrayage est reconnu, le moteur à combustion interne (2), de telle sorte que le nombre effectif de rotations par minute (N) ne soit pas inférieur au nombre de rotations par minute au ralenti (N_{IDLE}) augmenté de la première augmentation de démarrage (Δ_{N-1}) et de la deuxième augmentation de démarrage (Δ_{N-2}).

7. Procédé de commande selon la revendication 6, dans lequel l'instant de début du couplage des disques d'embrayage est reconnu lorsqu'une augmentation de l'accélération longitudinale (Ax) du véhicule (1) se produit.

8. Procédé de commande selon la revendication 6, dans lequel l'instant de début du couplage des disques d'embrayage est reconnu lorsqu'une diminution du nombre effectif de rotations par minute (N) et une augmentation de l'accélération longitudinale (Ax) du véhicule (1) se produisent simultanément.

9. Procédé de commande selon la revendication 6, 7 ou 8, dans lequel l'ampleur de la deuxième augmentation de démarrage (Δ_{N-2}) est déterminée en fonction d'une pente (RS) du tronçon de route sur lequel se déplace le véhicule (1) et/ou en fonction d'une accélération longitudinale (Ax) du véhicule (1), et/ou en fonction d'une position de la pédale d'accélérateur (GA).

10. Procédé de commande selon la revendication 9, dans lequel l'ampleur de la deuxième augmentation de démarrage (Δ_{N-2}) augmente lorsque la pente (RS) du tronçon de route sur lequel se déplace le véhicule (1) augmente, augmente lorsque l'accélération longitudinale (Ax) du véhicule (1) augmente, et augmente lorsque la position de la pédale d'accélérateur (GA) augmente.

11. Procédé de commande selon l'une quelconque des revendications 1 à 10, et comprenant les étapes supplémentaires consistant à :
déterminer une réserve de couple de ralenti (TR_{IDLE}) ;
établir une troisième augmentation de démarrage (Δ_{TR}) du nombre de rotations par minute ;
commander, lorsque le commencement de la phase de démarrage du véhicule (1) est reconnu, le moteur à combustion interne (2), de telle sorte que la réserve de couple effective ne soit pas inférieure à la réserve de couple de ralenti (TR_{IDLE}) augmentée de la troisième augmentation de démarrage (Δ_{TR}).

12. Procédé de commande selon la revendication 11, dans lequel l'ampleur de la troisième augmentation de démarrage (Δ_{TR}) est déterminée en fonction de la température (T_{H2O}) d'un liquide de refroidissement du moteur à combustion interne (2), et/ou en fonction d'une pente (RS) du tronçon de route sur lequel se déplace le véhicule (1), et/ou en fonction d'une position de la pédale d'accélérateur (GA), et/ou en fonction du nombre effectif de rotations par minute (N).

13. Procédé de commande selon la revendication 12, dans lequel l'ampleur de la troisième augmentation de démarrage (Δ_{TR}) augmente lorsque la température (T_{H2O}) du liquide de refroidissement diminue, augmente lorsque la pente (RS) du tronçon de route sur lequel se déplace le véhicule (1) augmente, diminue lorsque la position de la pédale d'accélérateur (GA) augmente, et augmente lorsque le nombre effectif de rotations par minute (N) diminue.

14. Procédé de commande selon l'une quelconque des revendications 1 à 13, et comprenant les étapes supplémentaires consistant à :
déterminer des coefficients (K_{IDLE}) d'au moins un régulateur (9), qui commande le nombre de rotations par minute ;
reconnaître l'instant de début d'un couplage des disques d'embrayage d'un embrayage (5) de la transmission (3) ;
établir une variation de démarrage (Δ_{K}) des coefficients ; et
faire varier, lorsque l'instant de début du couplage des disques d'embrayage est reconnu, les coefficients (K_{IDLE}) du régulateur (9) commandant le nombre de rotations par minute par l'application de la variation de démarrage (Δ_{K}).

15. Procédé de commande selon la revendication 14, dans lequel l'ampleur de la variation de démarrage (Δ_{K}) des coefficients est déterminée en fonction d'une pente (RS) du tronçon de route sur lequel se déplace le véhicule (1), et/ou en fonction d'un degré de couplage (%CL) des disques d'embrayage.

16. Procédé de commande selon la revendication 15, dans lequel le degré de couplage (%CL) des disques d'embrayage est donné par un rapport entre la vitesse de rotation d'un arbre de sortie de l'embrayage (5) et la vitesse de rotation d'un arbre d'entrée de l'embrayage (5).
